(19) Europäisches Patentamt / European Patent Office / Office européen des brevets

(11) **EP 2 962 845 B1**

(12) **EUROPEAN PATENT SPECIFICATION**

(45) Date of publication and mention
of the grant of the patent:
**21.03.2018 Bulletin 2018/12**

(21) Application number: **13876660.5**

(22) Date of filing: **25.06.2013**

(51) Int Cl.:
**B41M 5/52** *(2006.01)*          *B41M 5/50* *(2006.01)*

(86) International application number:
**PCT/JP2013/003953**

(87) International publication number:
**WO 2014/132295 (04.09.2014 Gazette 2014/36)**

(54) **MATERIAL, PRINTED MATERIAL, AND COATED MATERIAL**

MATERIAL, BEDRUCKTES MATERIAL UND BESCHICHTETES MATERIAL

MATÉRIAU, MATÉRIAU IMPRIMÉ ET MATÉRIAU REVÊTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2013 JP 2013038871**

(43) Date of publication of application:
**06.01.2016 Bulletin 2016/01**

(73) Proprietor: **Nisshin Steel Co., Ltd.
Chiyoda-ku
Tokyo 100-8366 (JP)**

(72) Inventors:
• **SATOU, Masaki
Chiyoda-ku
Tokyo 100-8366 (JP)**
• **SUZUKI, Seiju
Chiyoda-ku
Tokyo 100-8366 (JP)**
• **YOSHIDA, Hidenori
Chiyoda-ku
Tokyo 100-8366 (JP)**
• **SUGITA, Shuichi
Chiyoda-ku
Tokyo 100-8366 (JP)**
• **OKADA, Yuuichi
Chiyoda-ku
Tokyo 100-8366 (JP)**

(74) Representative: **Epping - Hermann - Fischer
Patentanwaltsgesellschaft mbH
Schloßschmidstraße 5
80639 München (DE)**

(56) References cited:
EP-A1- 0 997 314          JP-A- 2007 154 432
JP-A- 2008 063 832          JP-A- 2008 068 453
JP-A- 2008 080 629          JP-A- 2010 167 334
US-A1- 2010 209 611

## Description

Technical Field

The present invention relates to a material to be painted, and a printed material and a coated material having the material to be painted.

Background Art

Conventionally, siding boards have been often used as interior materials and exterior wall materials of buildings. Siding boards are roughly categorized into metallic sidings, ceramic sidings and woody sidings. A siding board is manufactured by forming a desired pattern by ink-jet printing or the like on the surface of a base material processed in a desired shape. When a pattern is to be formed by ink-jet printing, for example, spreading and adhesion of ink on the surface of the base material are important factors from the standpoint of design and durability.

PTLS 1 and 2 disclose printed materials having a base material, an ink receiving layer containing a polyester, and an ink layer. When manufacturing such printed materials, an ink layer is formed by ink-jet printing solvent ink on the surface of the ink receiving layer formed on the base material. At this time, the organic solvent contained in the solvent ink dissolves and thereby roughens a part of the surface of the ink receiving layer, and thus the solvent ink spreads over the ink receiving layer and adheres to the ink receiving layer.

In addition, PTLS 3 and 4 disclose printed materials having a base material, an ink receiving layer obtained by applying and curing a wrinkle paint, and an ink layer. When manufacturing such printed materials, a solvent or water-based ink is ink-jet printed on the surface of the ink receiving layer formed on the base material to form an ink layer. At this time, the ink spreads by capillarity through grooves on the surface of the ink receiving layer, and thus sufficient spreading can be achieved.

Further, PTL 5 discloses a printed material having a base material, an ink receiving layer in which beads are dispersed, and an ink layer. When manufacturing such a printed material, a solvent ink is ink-jet printed on the surface of the ink receiving layer formed on the base material to form an ink layer. At this time, the ink can sufficiently spreads through grooves of approximately several tens of micrometers depth which are defined by the beads on the surface of the ink receiving layer.

Citation List

Patent Literature

PTL 1
Japanese Patent Application Laid-Open No. 2000-107683
PTL 2
Japanese Patent Application Laid-Open No. 2008-272953
PTL 3
Japanese Patent Application Laid-Open No. 2008-036549
PTL 4
Japanese Patent Application Laid-Open No. 2008-068453
PTL 5
Japanese Patent Application Laid-Open No. 2002-355607

A material to be printed comprising a base paper and an ink receiving layer comprising a binder resin and a pigment wherein the surface of the ink receiving layer has an arithmetic average roughness Ra1 of 430 nm as measured in accordance with JIS B 0601 is known from US2010209611 which material is an inkjet recording medium.

Summary of Invention

Technical Problem

While ink-jet printing is performed using solvent or-water based inks in the above-mentioned exemplary cases, it is known in the art that actinic radiation-curable inks can also be used for in ink-jet printing. Actinic radiation-curable inks are almost free of volatile components such as solvent and water, and therefore are less likely to cause non-uniform color development due to the influence of the volatilization speed and the penetration speed of the solvent, degradation of printing quality due to the influence of spreading of the ink, and the like. Thus, advantageously, actinic radiation-curable inks can achieve stable and high quality printing. In view of this, actinic radiation-curable inks may be used for manufacturing a printed material such as a siding board.

However, when actinic radiation-curable ink is adopted in the techniques disclosed in PTLS 1 and 2, the surface of the ink receiving layer cannot be roughened, and the actinic radiation-curable ink cannot be sufficiently adhered to the surface. In addition, when actinic radiation-curable ink is adopted in the techniques disclosed in PTLS 3 to 5, since grooves of approximately several tens of micrometers depth are formed on the surface of the ink receiving layer, the ink spreads but cannot sufficiently adhere to the ink receiving layer.

For these reasons, when actinic radiation-curable ink is ink-jet printed on a material to be painted in which an ink receiving layer is formed on the surface of a base material, spreading and adhesion of ink cannot be ensured at the same time.

An object of the present invention is to provide a material to be painted which can ensure both spreading and adhesion of actinic radiation-curable ink. In addition, another object of the present invention is to provide a printed material and a coated material having the material to be painted.

Solution to Problem

The inventors have found that spreading and adhesion of actinic radiation-curable ink can be ensured at the same time by forming two kinds of irregularity having different sizes on the surface of the ink receiving layer, and have conducted further studies to accomplish the present invention.

Specifically, the present invention relates to material to be painted described below.

A material to be painted as defined in claim 1. Preferred embodiments of the material of the invention are defined in the dependent claims. A printed material as defined in claim 4. A coated material as defined in claim 5.

Advantageous Effects of Invention

According to the present invention, a material to be painted which can ensure spreading and adhesion of actinic radiation-curable ink at the same time can be provided. In addition, when the material to be painted according to the present invention is used, a printed material and a coated material which are excellent in design and durability can be provided.

Brief Description of Drawings

FIG. 1 is a schematic sectional view illustrating irregularity formed on a surface of an ink receiving layer; and
FIGS. 2A to 2D are enlarged photographs of dots on a surface of a material to be painted on which UV curable ink has been printed.

Description of Embodiments

1. Material to be painted

A material to be painted of an embodiment of the present invention includes a base material, and an ink receiving layer (coating film) disposed on the surface of the base material. The material to be painted of the embodiment of the present invention is suitable for a substrate of a siding board used as an interior material or an exterior wall material of a building, for example. In the following, components of the material to be painted of the embodiment of the present invention will be described.

[Base Material]

The type of the base material is not limited. Examples of the base material include a metallic base material (metal plate) and a ceramic base material.

Examples of the metallic base material include a plated steel sheet such as a hot-dip Zn-55%Al alloy-plated steel sheet, a steel sheet such as a normal steel sheet and a stainless-steel sheet, an aluminum plate and a copper plate. A tile-like, brick-like, or grain-like irregularities and the like may be provided to the metallic base materials by performing embossing, drawing and the like on the materials. Further, for the purpose of improving the heat insulating property and the soundproofness, it is also possible to cover the rear surface of the metallic base material with a foamed resin, aluminum laminate kraft paper whose core material is an inorganic material such as a gypsum board, or the like.

Examples of the ceramic base material include an unglazed ceramic board, a glazed-and-baked ceramic board, a cement plate, and a plate formed by using cementitious raw materials, phytofibrous raw materials and the like. A tile-like, brick-like, or grain-like irregularities and the like may be provided to the ceramic base materials by processing the materials.

A chemical conversion film, an undercoating film, and the like may be formed on the surface of the base material. The chemical conversion film is formed on the entire surface of the base material and improves corrosion resistance and adhesion of the coating film. The type of the chemical conversion treatment for forming the chemical conversion film is not limited. Examples of the chemical conversion treatment include chromate treatment, chromium free treatment, and phosphate treatment. The deposition amount of the chemical conversion film is not limited as long as the amount falls within a range that is effective for improving corrosion resistance and adhesion of the coating film. For example, in the case of a chromate film, it suffices to adjust the deposition amount such that the deposition amount is 5 to 100 mg/m$^2$ in terms of total Cr. In addition, in the case of a chromium free film, it suffices to adjust the deposition amount such that the deposition amount is 10 to 500 mg/m$^2$ for the Ti-Mo composite coating film, and to 3 to 100 mg/m$^2$ in terms of fluorine or total metallic element for the fluoroacid type film. In addition, in the case of a phosphate film, it suffices to adjust the deposition amount such that the deposition amount is 5 to 500 mg/m$^2$.

The undercoating film is formed on the surface of the base material or the chemical conversion film and improves corrosion resistance and adhesion of the coating film. The undercoating film is formed for example by applying a resin-containing undercoating onto the surface of the base material or the chemical conversion film, and drying (or curing) the undercoating. The type of the resin contained in the undercoating is not limited. Examples of the resin include polyesters, epoxy resins, and acrylic resins. Epoxy resins are preferable for their high polarity and favorable adhesion. In addition, the thickness of the undercoating film is not limited as long as the above-mentioned function can be achieved. The thickness of the undercoating film is approximately 5 $\mu$m, for example.

[Ink Receiving Layer]

The ink receiving layer is a layer provided on the entire surface of the base material and receives actinic radiation-curable ink. The ink receiving layer includes a resin serving as a matrix. A feature of that the ink receiving layer is that arithmetic average roughness Ra1 (hereinafter referred to as "arithmetic average roughness Ra1" or simply referred to as "Ra1") measured in accordance with JIS B 0601, and arithmetic average roughness Ra2 (hereinafter referred to as "arithmetic average roughness Ra2" or simply referred to as "Ra2") of a minute portion measured with an atomic force microscope fall within a predetermined range. It is to be noted that JIS B 0601:2013 is a standard whose content is the same as that of ISO 4287:1997.

With a measurement method in accordance with JIS B 0601 (ISO 4287), arithmetic average roughness Ra1 relating to relatively large irregularity on the surface of the ink receiving layer can be measured. According to a preliminary experiment conducted by the present inventors, the greater the value of Ra1, the more favorable spreading of the actinic radiation-curable ink is achieved. From the standpoint of the spreading and color development of the actinic radiation-curable ink, Ra1 falls within the range of 400 to 3,000 nm, preferably, within the range of 500 to 2,000 nm. When Ra1 is smaller than 400 nm, spreading of the actinic radiation-curable ink on the surface of the ink receiving layer is not sufficiently ensured. When Ra1 is greater than 3,000 nm, the actinic radiation-curable ink intrudes into deep grooves on the surface of the ink receiving layer, and consequently color is weakened. It is to be noted that when Ra1 is greater than 2,000 nm, the degree of spreading is maximized.

An atomic force microscope can measure arithmetic average roughness Ra2 relating to relatively small irregularity on the surface of the ink receiving layer.

According to a preliminary experiment conducted by the present inventors, the greater the value of Ra2, the more favorable adhesion of the actinic radiation-curable ink to the ink receiving layer is achieved. Ra2 is an average value obtained by measurement using an atomic force microscope with data pixel of 512×512 in the measurement range of 30 $\mu$m×30 $\mu$m. From the standpoint of the adhesion and color development of actinic radiation-curable ink, Ra2 falls within the range of 70 to 500 nm. When Ra2 is smaller than 70 nm, the actinic radiation-curable ink may not be sufficiently adhered. When Ra2 is greater than 500 nm, the actinic radiation-curable ink intrudes into deep grooves on the surface of the ink receiving layer, and consequently color may be weakened.

Here, arithmetic average roughness (Ra) is measured as follows: a portion stretching over a reference length L in the direction in which the average line extends is cut from the roughness curve, and this portion is represented in a new graph with the X axis extending in the same direction as the average line and the Y axis representing the magnitude; when the roughness curve is represented by y=f(x), Ra is a value in micrometers or nanometers obtained using the following Expression (1):
[Expression 1]

$$Ra = \frac{1}{L}\int_0^L |f(x)|dx \qquad (1)$$

f(x) can be measured by various means such as a stylus-type surface roughness meter gauge, an atomic force microscope (AFM), and a scan tunnel microscope (STM). As described in the following Examples, arithmetic average roughnesses Ra1 and Ra2 described herein are numerical values obtained by a stylus-type surface roughness meter gauge and an atomic force microscope, respectively.

As described above, a feature of the ink receiving layer is that it includes a resin (including cured resin) serving as a matrix, and has on its surface minute irregularity that satisfies the conditions of the above-mentioned arithmetic average roughness Ra1 and arithmetic average roughness Ra2.

The type of the resin serving as a matrix is not limited. Examples of the resin serving as a matrix include polyesters, acrylic resins, poly(vinylidene fluoride), polyurethanes, epoxy resins, polyvinyl alcohols, and phenol resins. From the standpoint of high weather resistance and adhesion with ink, the resin serving as a matrix is preferably a polyester, acrylic resin or poly(vinylidene fluoride). Preferably, the material of the matrix is not a material that forms a porous ink receiving layer for water-based ink. Porous ink receiving layers may be poor in moisture resistance and weather resistance, and may not be suitable for a building material or the like.

A polyester resin composition for forming the matrix contains a polyester, melamine resin, catalyst and amine, for example.

The type of the polyester is not limited as long as it undergoes crosslinking reaction with a melamine resin. Preferably, the number-average molecular weight of the polyester is, but not limited to, 5,000 or greater. In addition, preferably, the hydroxyl value of the polyester is, but not limited to, 40 mgKOH/g or lower. Preferably, the glass transition point of the polyester is, but not limited to, 0 to 70°C. When the glass transition point is lower than 0°C, the hardness of the ink receiving layer may be insufficient. On the other hand, when the glass transition point is higher than 70°C, processability may be lowered.

The melamine resin is a crosslinking agent of the polyester. Preferably, the melamine resin is, but not limited to, methylated melamine resin. Preferably, in the methylated melamine resin, the ratio of methoxy groups in the functional groups in the molecule is 80mol% or more. As the melamine resin, methylated melamine resin may be used alone or in combination with other melamine resins. Preferably, the melamine resin is blended with polyester at an approximate ratio of polyester:melamine resin = 70:30 by mass.

The catalyst promotes the reaction of the melamine resin. Examples of the catalyst include dodecylbenzenesulfonic acid, paratoluenesulfonic acid, and benzenesulfonic acid. Preferably, the catalyst is blended at a ratio of approximately 0.1 to 8% with respect to the resin solid content.

The amine neutralizes the catalyst reaction. Examples of the amine include triethylamine, dimethylethanolamine, dimethylaminoethanol, monoethanolamine, and isopropanolamine. Preferably, the blending ratio of the amine is, but not limited to, 50% or more of the equivalent of the acid (catalyst).

The acrylic resin composition for forming the matrix is for example an acrylic resin emulsion. Preferably, the molecular weight of the acrylic resin emulsion falls within the range of 200,000 to 2,000,000. The molecular weight of the acrylic resin emulsion can be measured by gel permeation chromatography (GCP).

The polyfluoridevinylidene resin composition for forming the matrix is a resin composition obtained for example by blending a thermoplastic acrylic resin with poly(vinylidene fluoride) at a weight ratio of 20/80 to 50/50.

The method of forming minute irregularity that satisfies the above-described conditions of Ra1 and Ra2 on the surface of the ink receiving layer is not limited. Examples of the method include nanoimprinting method, and shot peening method.

In the nanoimprinting method, a mold provided with a texture (irregularity) that satisfies Ra1 and Ra2, and a resin layer (ink receiving layer) that is formed on the base material are brought into pressure contact with each other under heating. The mold used in the nanoimprinting method may be manufactured by utilizing direct-plate making or electronic engraving plate making known in the art.

In direct plate making, a Ni layer is plated as a primer layer on the surface (pushing surface side) of a forming mold made of iron or the like. Next, a Cu layer is plated on the surface of the Ni layer. It is to be noted that the surface of the Cu layer may be polished to flatten the pushing surface as necessary. Next, a sensitizing solution is applied to the surface of the Cu layer to form a photosensitive layer. Then, in a state where a film provided with a predetermined pattern is adhered on the surface of the photosensitive layer, ultraviolet ray is applied from the film side for light exposure, and a latent image is formed and developed (patterned) on the photosensitive layer. Finally, the Cu layer exposed from the patterned light exposed layer is etched with use of cupric chloride aqueous solution and then the photosensitive layer is peeled off. Through the above-mentioned procedures, a mold provided with a texture that satisfies the conditions of Ra1 and Ra2 can be manufactured.

In electronic engraving plate making, after a Cu layer is formed on the surface of a forming mold as in the direct plate making, the surface of the Cu layer is directly processed based on data created by CAD (computer-aided design), image processing and the like. A diamond stylus, laser beam and the like may be used for the processing.

In view of hardness and durability, a protective layer is formed on the surface of a mold manufactured by the above-mentioned methods. Normally, the type of the protective layer is, but not limited to, a Cr/Ni layer, a Cr layer or a Ni layer formed by plating. The thickness of the protective layer is, but not limited to, 10 to 50 $\mu$m. When the thickness of the protective layer is smaller than 10 $\mu$m, the protective layer may be non-uniform. When the thickness of the protective layer is greater than 50 $\mu$m, cracking may occur in the protective layer.

When forming irregularity on the surface of the ink receiving layer with use of a mold formed in the above-mentioned manner, the base material on which the resin layer is formed may be pressed against the mold, or the mold may be pressed against the base material on which the resin layer is formed. In addition, the mold may be pressed against the base material on which the resin layer is formed with use of a step-and-repeat method in which pressing of the mold and sending out of the base material are alternately performed, or a continuous roll press method using a texture roll. The continuous roll press method is suitable for mass-production since the method can form minute irregularity on the surface of the resin layer with high speed and favorable reproducibility. In view of maintenance of the texture roll as well as rapid and reproducible formation of minute irregularity, it is preferable to form irregularity such that Ra2 falls within a predetermined range after irregularity is formed such that Ra1 falls within a predetermined range.

In the shot peening method, an oxide-based abrasive is used. With the shot peening method, a predetermined irregularity can be formed on the surface of the ink receiving layer by appropriately adjusting the particle size of the abrasive, the speed of the shot particle, the peening time and the like. It is to be noted that irregularity whose Ra1 and Ra2 fall within the above-described ranges can be formed by, after adjusting Ra1 with use of abrasive (e.g., alumina fine powder-based abrasive #1500; NICCHU CO., LTD) whose particle size range falls within the range of 4.5 to 20 $\mu$m, adjusting Ra2 with use of abrasive (e.g., alumina fine powder-based abrasive #4000; NICCHU CO., LTD) whose granularity range falls within the range of 1.3 to 8 $\mu$m. As described, preferably, the particle size of the abrasive for adjusting Ra2 is smaller than the particle size of the abrasive for adjusting Ra1.

Further, irregularity may be formed on the surface of the ink receiving layer also by a method in which a pigment whose particle size and formulation amount are properly adjusted is added to the resin composition for forming the matrix. The "pigment" as used herein includes at least extender pigment (including beads) and coloring pigment.

According to the present invention the ratio of pigment in the ink receiving layer falls within the range of 50 to 75wt%. When the ratio of pigment is lower than 50wt%, arithmetic average roughness Ra2 is smaller than 70 nm, and the adhesion of the actinic radiation-curable ink may not be ensured. When the ratio of pigment is greater than 75wt%, the amount of the resin component is small, and the ink receiving layer may be peeled off when the ink receiving layer is damaged. In addition, processability may be degraded, and cracking of the coating film and decrease in moisture resistance may be caused. The "ratio of pigment" as used herein is equivalent to the pigment weight concentration (%) of the coating used at the time of forming the ink receiving layer. The pigment weight concentration (PWC) is calculated based on the following Expression (2).

Pigment weight concentration (%) = Pigment weight /(Pigment weight + Resin composition weight) $\times$ 100 ...(2)

To set arithmetic average roughness Ra1 to 400 to 3,000 nm, the ink receiving layer contains pigment having a particle size of 4 $\mu$m or larger and that the pigment include 10 to 30wt% of pigment whose particle size of 4 $\mu$m or larger in the ink receiving layer. When the ratio of the pigment having a particle size of 4 $\mu$m or larger is lower than 10wt%, it is difficult to set Ra1 to 400 nm or greater, and spreading of the actinic radiation-curable ink may not be sufficiently ensured. When the ratio of the pigment having a particle size of 4 $\mu$m or larger is higher than 30wt%, Ra1 may be excessively increased, and printing density may be reduced due to absorption of the actinic radiation-curable ink.

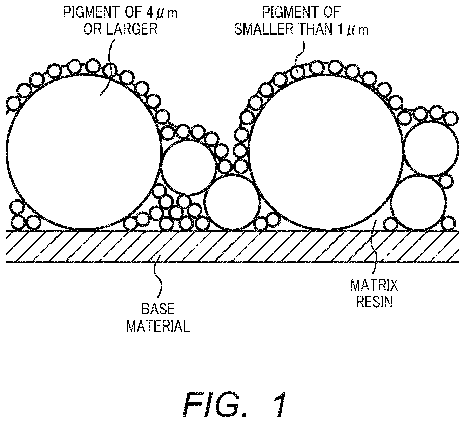

Preferably, the ink receiving layer contains a combination of pigment having a particle size of 4 $\mu$m or greater, and pigment having a particle size of smaller than 1 $\mu$m. FIG. 1 is a schematic sectional view of an ink receiving layer formed in the above-mentioned manner. By providing the ink receiving layer with a combination of pigment having a particle size of 4 $\mu$m or greater and pigment having a particle size of smaller than 1 $\mu$m, a state is established in which pigment having a particle size of smaller than 1 $\mu$m is dispersed in matrix resin covering pigment having a particle size of 4 $\mu$m, as illustrated in FIG. 1. Thus, irregularity having Ra1 and Ra2 falling within predetermined ranges can be stably formed. It is to be noted that the particle size of the pigment is calculated from the particle size and the number-based particle size distribution measured using the Coulter counter method.

The type of the extender pigment is not limited. Examples of the extender pigment include silica, calcium carbonate, barium sulfate, aluminum hydroxide, talc, mica, resin beads, and glass beads.

The type of the resin beads is not limited. Examples of the resin beads include acrylic resin beads, polyacrylonitrile beads, polyethylene beads, polypropylene beads, polyester beads, urethane resin beads, and epoxy resin beads. Such resin beads may be produced by using methods known in the art, or commercially available products may be used. Examples of commercially available acrylic resin beads include "TAFTIC AR650S (mean particle diameter: 18 $\mu$m)," "TAFTIC AR650M (mean particle diameter: 30 $\mu$m)," "TAFTIC AR650MX (mean particle diameter: 40 $\mu$m)," "TAFTIC AR650MZ (mean particle diameter: 60 $\mu$m)," "TAFTIC AR650ML (mean particle diameter: 80 $\mu$m)," "TAFTIC AR650L

(mean particle diameter: 100 $\mu$m)" and "TAFTIC AR650LL (mean particle diameter: 150 $\mu$m)" that are available from Toyobo Co., Ltd. In addition, examples of commercially available polyacrylonitrile beads include "TAFTIC A-20 (mean particle diameter: 24 $\mu$m)," "TAFTIC YK-30 (mean particle diameter: 33 $\mu$m)," "TAFTIC YK-50 (mean particle diameter: 50 $\mu$m)" and "TAFTIC YK-80 (mean particle diameter: 80 $\mu$m)" that are available from Toyobo Co., Ltd.

The type of the coloring pigment is not limited. Examples of the coloring pigment include carbon black, titanium oxide, iron oxide, yellow iron oxide, phthalocyanine blue, and cobalt blue.

Preferably, the thickness of the ink receiving layer is, but not limited to, 10 to 40 $\mu$m. When the thickness is smaller than 10 $\mu$m, the durability and hiding property of the ink receiving layer may be insufficient. When the thickness is greater than 40 $\mu$m, the manufacturing cost may be increased, and blister may easily occur at the time of baking. In addition, the surface of the ink receiving layer may have orange peel finish so that the external appearance may be degraded.

In addition, from the viewpoint of improving embossing and contamination resistance of the material to be painted, the ink receiving layer may contain, as the pigment having a particle size of 4 $\mu$m or greater, 2 to 30wt% of beads having a particle size of 15 to 80 $\mu$m that is greater than the thickness of the ink receiving layer. By allowing the beads to protrude from the surface of the ink receiving layer, the slidability of the ink receiving layer is improved and embossing of material to be painted is also significantly improved. In addition, by allowing the beads to protrude from the surface of the ink receiving layer, the ink receiving layer becomes stain-proof even when the material to be painted is overlaid prior to printing. When the ratio of beads having a particle size of 15 to 80 $\mu$m is lower than 2wt%, the embossing and contamination resistance of the material to be painted may not be sufficiently improved. In addition, when the particle size of the beads is greater than 80 $\mu$m, the beads may fall from the coating film, and the embossing and the contamination resistance of the material to be painted may not be sufficiently improved.

In addition, the ink receiving layer may be blended with wax. Wax can improve lubricity, thereby improving embossing and contamination resistance. In general, however, wax reduces adhesion of the actinic radiation-curable ink, and therefore wax is preferably not blended. In particular, petroleum wax and polyethylene wax melt and spread on the surface of the coating film at the time of baking, thus reducing the adhesion of the actinic radiation-curable ink. In view of this, it is preferable to use PTFE fine powder wax as wax for improving lubricity. PTFE fine powder wax does not melt and spread on the surface of the coating film at the baking temperature, and therefore does not reduce the adhesion of the actinic radiation-curable ink.

As described above, in the material to be painted of the embodiment of the present invention, arithmetic average roughness Ra1 measured in accordance with JIS B 0601 and arithmetic average roughness Ra2 measured with an atomic force microscope on the surface of the ink receiving layer fall within predetermined ranges. Thus, the material to be painted of the embodiment of the present invention can ensure both spreading and adhesion of the actinic radiation-curable ink.

The manufacturing method of the material to be painted according to the present invention is not limited. For example, the material to be painted according to the present invention may be manufactured by, after a paint containing a predetermined amount of resin is applied and dried on the surface of a base material to form a resin layer, providing irregularity on the surface by nanoimprinting method, shot peening method, or the like. Alternatively, the material to be painted according to the present invention may be manufactured by applying and drying (or curing) a paint formulated with an appropriate amount of pigment having a proper particle size and a predetermined amount of resin. A chemical conversion film and an undercoating film may be formed before the ink receiving layer is formed.

It is to be noted that the nanoimprinting method cannot form minute irregularity in a recess of an embossed siding board. In addition, when minute irregularity is formed in a recess (e.g., joint part) of a deeply embossed siding board such as a brick wall-like board by the shot peening method, the ink receiving layer of the protruding portion (e.g., brick forming portion) may come off, Ra1 may be greater than 3000 nm, and Ra2 may be greater than 500 nm. In view of this, when minute irregularity is to be provided to the ink receiving layer of a complicated embossed member, it is preferable to use a paint containing an appropriate amount of pigment having a proper particle size. In addition, a metal plate on which an ink receiving layer has been formed may be processed into a desired shape with an emboss roll.

When a chemical conversion film is to be formed on the surface of a base material, a chemical conversion film can be formed by applying a chemical conversion treatment solution onto the surface of the base material, and drying the chemical conversion treatment solution. The method of applying the chemical conversion treatment solution is not limited, and may be appropriately selected from methods known in the art. Examples of the application method include roll coating, curtain flow coating, spin coating, air-spray coating, airless-spray coating, and dip coating. The condition of drying chemical conversion treatment solution may be appropriately set in accordance with the chemical conversion treatment solution's composition and the like. For example, when a base material on which a chemical conversion treatment solution has been applied is put in a drying oven without washing with water, and is heated such that the final plate temperature falls within the range of 80 to 250°C, a uniform chemical conversion film can be formed on the surface of the base material. In addition, when an undercoating film is additionally formed, the undercoating film can be formed by applying an undercoating on the surface of a chemical conversion film, and by drying the undercoating. The method of applying the undercoating may be the same as that used for the chemical conversion treatment solution. The condition of drying the undercoating film may be appropriately set in accordance with the type of the resin or the like. For example, by applying heat such that the final plate temperature falls within the range of 150 to 250°C, a uniform undercoating film can be formed on the surface of the chemical conversion film.

The ink receiving layer is formed by: 1) applying and drying (or curing) the above-described resin-containing paint on the surface of the base material (or the chemical conversion film or the undercoating film) and providing irregularity to the surface of the base material by nanoimprinting method, shot peening method or the like; or 2) applying and drying (or curing) the above-described paint containing resin and pigment on the surface of the base material (or the chemical conversion film or the undercoating film). The method of applying the coating is not limited, and any of the methods known in the art may be appropriately selected. Examples of the application method include roll coating, curtain flow coating, spin coating, air-spray coating, airless-spray coating, and dip coating. The condition of drying the paint is not limited. For example, the ink receiving layer can be formed on the surface of the base material (or chemical conversion film or undercoating film) by drying a base material on which a coating containing resin and pigment has been applied such that the final plate temperature falls within the range of 150 to 250°C.

2. Printed material and Coated material

A printed material which can be used as a siding board can be manufactured by forming an ink layer on the surface of the material to be painted of the embodiment of the present invention (the surface of the ink receiving layer) by ink-jet printing. Further, a coated material which exhibits excellent durability can be manufactured by forming an overcoat layer on the surface of the printed material.

[Ink Layer]

The ink layer is disposed on the surface of the ink receiving layer. The ink layer is disposed on part or the entire surface of the ink receiving layer such that a desired image is formed on the surface of the ink receiving layer. The ink layer is formed by applying actinic radiation-curable ink on the surface of the ink receiving layer by ink-jet printing and curing the applied actinic radiation-curable ink.

The type of the actinic radiation-curable ink is not limited as long as the actinic radiation-curable ink can be cured when the ink is irradiated with actinic radiation. Examples of the actinic radiation-curable ink include radical ultraviolet curable ink (radical UV curable ink) and cationic ultraviolet curable ink (cationic UV curable ink). In the following, examples of radical UV curable ink and cationic UV curable ink will be described.

(Radical UV curable ink)

The radical UV curable ink contains pigment, reactive monomer and/or reactive oligomer, and photopolymerization initiator.

The type of the pigment is not limited as long as the pigment is organic pigment or inorganic pigment. Examples of the organic pigment include nitrosos, dye lakes, azo lakes, insoluble azos, monoazos, disazos, condensed azos, benzimidazolones, phthalocyanines, anthraquinones, perylenes, quinacridones, dioxazines, isoindolines, azomethines and pyrrolopyrroles. In addition, examples of the inorganic pigment include oxides, hydroxides, sulfides, ferrocyanides, chromates, carbonates, silicates, phosphates, carbons (carbon black) and metal powders. Preferably, the blending amount of the pigment provided in the UV curable ink falls within the range of 0.5 to 20wt%. When the amount of the pigment of the UV curable ink is lower than 0.5wt%, coloring may be insufficient, and a desired image may not be formed. When the amount of the pigment is higher than 20wt%, the viscosity of the UV curable ink may be excessively high, and discharging failure of the ink-jet head may be caused.

The type of the reactive monomer is not limited. Preferably, the reactive monomer is a difunctional monomer from the standpoint of toughness and flexibility. Examples of the difunctional monomer include aliphatic reactive monomers such as 1,6-hexanediol diacrylate, neopentyl glycol diacrylate, 1,3-butanediol diacrylate, 1,4-butanediol diacrylate, and 1,9-nonanediol diacrylate. Preferably, the blending amount of the reactive monomer in the UV curable ink falls within the range of 50 to 85wt%. When the amount of the reactive monomer is lower than 50wt%, the viscosity of the UV curable ink may be high and ink ejection failure may occur. When the amount of the reactive monomer is higher than 85wt%, the UV curable ink may not be cured.

The type of the reactive oligomer is not limited. Examples of the reactive oligomer include urethane acrylate, polyester acrylate, epoxy acrylate, silicon acrylate, and polybutadiene acrylate. These reactive oligomers may be used alone or in combination. Among these reactive oligomers, urethane acrylate is preferable from the standpoint of toughness, flexibility and adhesion. More preferably, the urethane acrylate is aliphatic hydrocarbon-based urethane acrylate from the standpoint of yellowing-resistance.

The type of the photopolymerization initiator is not limited. Preferably, the photopolymerization initiator is hydroxy ketones or acylphosphine oxides from the standpoint of high reaction and yellowing-resistance. Preferably, the blending amount of the photopolymerization initiator in the UV curable ink falls within the range of 1 to 15wt%. When the amount of the photopolymerization initiator is lower than 1wt%, the UV curable ink may not be cured. When the amount of the photopolymerization initiator is higher than 15wt%, the curing ratio and curing speed of the UV curable ink are maximized, which is disadvantageous in terms of cost.

If necessary, the radical UV curable ink may additionally contain sensitizers, thermostabilizers, antioxidants, antiseptics, anti-foaming agents, resin binders, resin emulsions, reduction inhibitors, leveling agents, pH adjusters, pigment derivatives, polymerization inhibitors, ultraviolet ray absorbers, photostabilizer s, and the like.

(Cationic UV curable ink)

The cationic UV curable ink contains pigment, dispersant, cationically polymerizable compound, and photopolymerization initiator. The pigment may be identical to the pigment for the radical UV curable ink. In addition, the preferable blending amount of the pigment is the same as that for the radical UV curable ink.

The type of the dispersant is not limited. Either of low-molecular dispersant or polymer dispersant may be used as the dispersant. The dispersant may be produced by using methods known in the art, or commercially available products may be used. Examples of commercially available dispersants include "AJISPER PB822" and "AJISPER PB821" (both available from Ajinomoto Fine-Techno Co., Inc.).

The type of the cationically polymerizable compound is not limited. Examples of the cationically polymerizable compound include aromatic epoxides, alicyclic epoxides and aliphatic epoxides. Examples of aromatic epoxides include di- or poly-glycidyl ethers of bisphenol A or alkylene oxide adduct of bisphenol A, di- or poly-glycidyl ethers of hydrogenated bisphenol A or alkylene oxide adduct of hydrogenated bisphenol A, and novolac epoxy resins. Examples of the alicyclic epoxides include compounds containing cyclohexene oxide or cyclopentene oxide which are obtained by epoxidation of compounds having at least one cycloalkane ring such as a cyclohexene ring or cyclopentene ring, with an oxidant such as hydrogen peroxide or peroxy acid. Examples of the aliphatic epoxides include diglycidyl ethers of alkylene glycols such as diglycidyl ethers of ethylene glycol, diglycidyl ethers of propylene glycol diglycidyl ether of 1,6-hexanediol; polyglycidyl ethers of polyols such as di- or tri-glycidyl ethers of glycerin or alkylene oxide adduct of glycerin; and diglycidyl ethers of polyethylene glycol such as diglycidyl ethers of polyethylene glycol or alkylene oxide adduct of polyethylene glycol, and diglycidyl ethers of polypropylene glycol or alkylene oxide adduct of polypropylene glycol.

The type of the photopolymerization initiator is not limited. Examples of the photopolymerization initiator include acetophenone, 2,2-diethoxy acetophenone, p-dimethyl amino acetophenone, p-dimethyl amino propiophenone, benzophenone, 2-chlorobenzophenone, pp'-dichlorobenzophenone, pp'-bisdiethyl amino benzophenone, Michler ketone, benzil, benzoin, benzoin methyl ether, benzoin ethyl ether, benzoin isopropyl ether, benzoin n-propyl ether, benzoin isobutyl ether, benzoin n-butyl ether, benzil dimethyl ketal, tetramethyl thiurammonosulfide, thioxanthone, 2-chlorothioxanthone, 2-methyl thioxanthone, azobisisobutyronitrile, benzoinperoxide, di-tert-butyl peroxide, 1-hydroxy cyclohexyl phenyl ketone, 2-hydroxy-2-methyl-1-phenyl-1-on, 1-(4-isopropylphenyl)-2-hydroxy-2-methyl propane-1-on, and methyl benzoylformate.

In addition, the cationic UV curable ink may contain, as an optional component, an oxetane compound. Examples of the oxetane compound include known oxetane compounds disclosed in Japanese Patent Application Laid-Open Nos. 2001-220526 and 2001-310937 and the like. In addition, the oxetane compound may be used alone, or a combination of a monofunctional oxetane compound containing one oxetane ring and a multifunctional oxetane compound containing two or more oxetane rings may be used.

For example, the printed material of the embodiment of the present invention can be manufactured by, after ink-jet printing the actinic radiation-curable ink (e.g., UV curable ink) on the surface of the material to be painted of the embodiment of the present invention (surface of the ink receiving layer) with use of an ink-jet printer, emitting actinic radiation (e.g., ultraviolet ray) such that the integrated amount of the light falls within the range of 100 to 800 m J/cm$^2$ to cure the actinic radiation-curable ink. For example, integrated amount of ultraviolet ray may be measured using an ultraviolet ray illuminometer/actinometer (UV-351-25; ORC Manufacturing Co., Ltd.), with a measurement wavelength range of 240 to 275 nm and a measurement wavelength center of 254 nm.

As described above, in the material to be painted of the embodiment of the present invention, arithmetic average roughness Ra1 measured in accordance with JIS B 0601 and arithmetic average roughness Ra2 measured with an atomic force microscope on the surface of the ink receiving layer fall within predetermined ranges. Thus, the material to be painted of the embodiment of the present invention can ensure both spreading and adhesion of the actinic radiation-curable ink. Consequently, in the printed material of the embodiment of the present invention, the ink layer is formed at an appropriate position in close contact with the ink receiving layer. Accordingly, the printed material of the embodiment of the present invention provides excellent design property and durability.

[Overcoat layer]

As described above, an overcoat layer may be additionally formed on the surface of the printed material of the embodiment of the present invention (on the surface of the ink layer).

The type of the overcoat paint for forming the overcoat layer is not limited. Examples of the overcoat paint include organic solvent type paints, water-based paints, and powder paints. The resin component used for the above-mentioned paints is not limited. Examples of the resin component include acrylic resin-based components, polyester-based components, alkyd resin-based components, silicone modified acrylic resin-based components, silicone modified polyester-based components, silicone resin-based components, and fluororesin-based components. These resin components may be used alone or in combination. In addition, as necessary, the overcoat paint may be provided with crosslinking agents such as polyisocyanate compound, amino resin, epoxy group-containing compound, and carboxy group-containing compound.

The method of manufacturing the coated material according to the embodiment of the present invention is not limited. For example, the overcoat layer is formed by applying the paint (overcoat paint) for forming the overcoat layer to the surface of the ink layer, and by drying (or curing) the applied paint. The method of applying the overcoat paint is not limited, and any of the methods known in the art may be appropriately selected. Examples of the application method include a roll coating method, a curtain flow method, a spin coating method, an air-spray method, an airless-spray method, a dip-and-draw up method and the like. The condition under which the overcoat paint is dried is not limited. For example, by drying a printed material on which the overcoat paint has been applied such that the final plate temperature falls within the range of 60 to 150°C, the overcoat layer may be formed on the surface of the printed material.

As described above, a coated material can be manufactured by forming the overcoat layer on the surface of the printed material of the embodiment of the present invention. The coated material of the embodiment of the present invention has the overcoat layer that protects the ink layer, and thus provides further excellent durability.

3. Effect of the Present Invention

In general, the viscosity at a temperature of 25°C of ink-jet ink which can be discharged from a piezo-type ink-jet head is approximately 3 to 50 mPa·s. The viscosity of solvent or water-based ink can be readily adjusted by dilution with solvent or water. In addition, the hydrophilicity of solvent or water-based ink can be increased by adding a high polarity binder resin having a hydrophilic group such as hydroxyl group or carboxyl group. Therefore, with the inventions disclosed in PTLS 1 to 5, solvent or water-based ink can adhere to a heat-curable polyester based coating film or the like.

In contrast, actinic radiation-curable ink (e.g., UV curable ink) is almost free of volatile components such as solvent and water, and therefore less likely to cause such problems that significantly impair image quality due to a difference in spreading of the ink and non-uniform color development due to the volatilization speed or the penetration speed of the solvent component. Therefore, when actinic radiation-curable ink is used, advantageously, image quality is significantly stabilized in comparison with the case where solvent-based ink or aqueous ink is used. However, since almost no solvent, water, and the like are contained in actinic radiation-curable ink, the blending amounts of viscous monomers such as cation polymerization monomer and acrylic monomer which have a polar group such as hydroxyl group or carboxyl group are considerably limited in actinic radiation-curable ink from the standpoint of increase in viscosity. For this reason, an ink layer formed with use of actinic radiation-curable ink has a low polarity and has hydrophobicity, and consequently is poor in adhesion to a heat curable polyester based coating film.

As described, when actinic radiation-curable ink is printed to a conventional material to be painted, the ink may not sufficiently adhere to a heat curable polyester coating film. To solve such a problem, some solutions have been proposed.

For example, Japanese Patent Application Laid-Open No. 2010-167334 discloses a method of manufacturing a building plate in which the curing ratio of UV curable ink containing acrylic monomer is reduced to 50 to 90%. In this method, the curing ratio of UV curable ink is reduced to improve the flexibility of the ink layer, thereby improving the adhesion of an ink layer composed of a cured product of the UV curable ink. In this manufacturing method, however, it is highly possible that unreacted acrylic monomer having a double bond remains in the ink layer. The double bond of this acrylic monomer absorbs ultraviolet ray, and thus may degrade the weather resistance of the ink layer.

In contrast, with the material to be painted of the embodiment of the present invention, even when actinic radiation-curable ink is ink-jet printed and is further sufficiently cured, favorable adhesion of the actinic radiation-curable ink is ensured. Thus, the printed material of the embodiment of the present invention also achieves excellent weather resistance of the ink layer.

In the following, the present invention will be described in detail with reference to Examples which however shall not be construed as limiting the present invention. Examples

[Example 1]

1. Production of Printed material

(1) Material to be painted

As an original sheet to be painted, a hot-dip Zn-55%Al alloy-plated steel sheet having a sheet thickness of 0.27 mm and a per-side plating deposition amount of 90g/m$^2$ was prepared. Application-type chromate treatment liquid (NRC300NS; Nippon Paint Co., Ltd.) was applied on the surface of an alkali-degreased original sheet to form a chemical conversion film whose deposition amount in terms of total chromium is 50 mg/m$^2$. Next, polyester based primer paint (700P; Nippon paint Industrial Coatings Co., LTD.) was applied on the chemical conversion film with use of Bar-Coater, and then baked at final plate temperature of 215°C to form an undercoating film having a dry film thickness of 5 $\mu$m.
Next, a resin composition for forming an ink receiving layer was applied on the undercoating film with use of Bar-Coater, and then baked at a final plate temperature of 225°C for one minute to form an ink receiving layer having a dry film thickness of 20 $\mu$m. The resin composition (white coating) was prepared by mixing polyester (number-average molecular weight 5000, glass transition temperature 30°C, hydroxyl value 28 mgKOH/g; DIC Inc.) with methylated melamine resin (CYMEL 303; Mitsui Cytec Co., Ltd.) as crosslinking agent at a rate of 70:30 to obtain a base resin, and by further adding catalyst, amine and coloring pigment to the base resin. As the catalyst, dodecylbenzenesulfonic acid was added in an amount of 1wt% with respect to the resin solid content. As the amine, dimethyl amino ethanol was added in an amount of 1.25 times the acid equivalent of dodecylbenzenesulfonic acid, as the amine equivalent. As coloring pigment, titanium oxide (JR-603; TAYCA CORP.) having a mean particle diameter of 0.28 $\mu$m was added in an amount of 45wt% with respect to the resin solid content.

(2) Formation of Irregularity

First texture rolls having arithmetic average roughness Ra1 of 500, 1,000, 1,500, 2,000, and 3,000 nm which were measured in accordance with JIS B 0601 (ISO 4287), and second texture rolls having arithmetic average roughness Ra2 of 100, 300, and 500 nm which were measured with an atomic force microscope were produced by an electronic engraving plate making method. Next, the first texture roll heated to 150°C was pressed against a base material on which a resin composition was baked, and then the second texture roll heated to 150°C was pressed against the base material, thereby forming irregularity on the ink receiving layer.

(3) Measurement of Surface Roughness

A. Measurement of Surface Roughness In accordance with JIS B 0601 (ISO 4287)

With use of a stylus-type surface roughness meter gauge (Dektak150; Ulvac phi incorporated company), arithmetic average roughness Ra1 on the surface of the ink receiving layer was measured. Measurement of arithmetic average roughness Ra1 was conducted by scanning for 60 seconds under a condition of a stylus pressure of 3 mg, a stylus radius of 2.5 $\mu$m, and a scan distance of 1 mm. It is to be noted that the stylus-type surface roughness meter gauge has a vertical resolution of 0.1 nm /6.5 $\mu$m, 1 nm /65.5 $\mu$m, and 8 nm /524 $\mu$m.

B. Measurement of Surface Roughness with Use of Atomic Force Microscope

With use of a scan-type probe microscope (Type D3100; Veeco Instruments, Inc.), arithmetic average roughness Ra2 of a minute portion on the surface of the ink receiving layer was measured. Measurement of arithmetic average roughness Ra2 was conducted with use of a tapping mode atomic force microscope (AFM), with a scan size of 30 $\mu$m$\times$30 $\mu$m, and pixel data of 512$\times$512. In addition, a control station of Nanoscope IIIa type was used.

(4) Ink-jet Printing

Ink-jet printing was conducted on the base material by an ink-jet printer (PATTERNING JET; TRYTECH Co., Ltd.) with use of radical UV curable ink prepared in the following procedures. Ultraviolet ray was applied to the surface of the base material on which ink-jet printing had been performed, and the radical UV curable ink was cured. The preparation method of the radical UV curable ink, the condition of ink-jet printing and the condition of irradiation of ultraviolet ray were as follows.

A. Method of Preparing Radical UV curable ink

10 parts by weight of a pigment dispersion liquid containing 20wt% of black pigment (pigment: NIPex35, Degussa Japan Inc., dispersing medium: PO modified neopentyl diacrylate, Sartomer Inc.); 25 parts by weight of mixture (CN985B88, Sartomer Inc.) of 88 parts by weight of difunctional aliphatic urethane acrylate and 12 parts by weight of 1,6-hexanediol diacrylate, and 57 parts by weight of 1,6-hexanediol diacrylate (SR238F, Sartomer Inc.) as reactive oligomer; and 5 parts by weight of 1-hydroxy-cyclohexyl-phenyl ketone (IRGACURE184; CIBA Japan Inc.) and 3 parts by weight of bis (2, 4, 6-1 trimethyl benzoyl)-phenyl phosphine oxide (IRGACURE819; CIBA Japan Inc.) as photopolymerization initiator; were mixed to prepare radical UV curable ink.

B. Condition of Ink-jet Printing

Ink-jet printing was conducted with use of an ink-jet head having a nozzle diameter of 35 $\mu$m. In addition, ink-jet printing was conducted under a condition of a head heating temperature of 45°C, an application voltage of 11.5 V, a pulse width of 10.0 $\mu$s, a drive frequency of 3483 Hz, an ink drop volume of 42 pl, and a resolution of 360 dpi.

C. Condition of Irradiation of Ultraviolet Ray

To the base material on which the ink-jet printing had been applied, ultraviolet ray was applied with use of a high-pressure mercury lamp (H valve; Fusion UV Systems Japan Inc.) such that the integrated amount of light is 600 mJ/cm$^2$ (measured with infrared ray actinometer UV-351-25; ORC Manufacturing Co., Ltd.) with a lamp output of 200W/cm.

2. Evaluation on Ink Receiving Layer

Spreading of the radical UV curable ink on the ink receiving layer was evaluated based on the dot diameter of the ink struck on the surface of the material to be painted and the L*value of the printed portion. In addition, adhesion of the radical UV curable ink to the ink receiving layer was evaluated.

(1) Evaluation on Spreading of Radical UV curable ink on Ink Receiving Layer (Dot Diameter)

One dot (resolution 360 dpi) of the radical UV curable ink is printed on the surface of the material to be painted in an ink amount of 42pl, and the dot diameter was measured with a microscope.

(2) Evaluation on Spreading of Radical UV curable ink on Ink Receiving Layer (L*value)

UV curable ink was printed on the surface of the material to be painted at 100% (application amount of ink: 8.4g/m$^2$) such that the resolution is 360 dpi. L*value at a center portion of the printed material after the printing was measured in accordance with JIS K 5600. When UV curable ink spreads, the gap of the UV curable ink is eliminated and consequently the L*value is reduced. On the other hand, when spreading of the UV curable ink is insufficient, the ink receiving layer is exposed and the L*value is increased. Therefore, the evaluation is "A" when the L*value is equal to or smaller than 25, the evaluation is "B" when the L*value is greater than 25 and smaller than 30, the evaluation is "C" when the L*value is equal to or greater than 30 and smaller than 35, the evaluation is "D" when the L*value is equal to or greater than 35 and smaller than 40, and the evaluation is "E" when the L*value is equal to or greater than 40.

(3) Evaluation on Adhesion of UV curable ink of Radical-polymerization Type to Ink Receiving Layer

The UV curable ink was printed on the surface of the material to be painted at 100% (ink amount of application: 8.4g/m$^2$) such that the resolution is 360 dpi. Then, a cross-cut adhesion test in accordance with JIS K5600-5-6 G 330 was conducted on the printed material. To be more specific, cuts were formed through the surface of the printed material to provide a pattern of 100 identical squares at intervals of 1 mm, and an adhesive tape was attached to the part. After the tape was peeled off, the remaining rate of the coating film was confirmed. The evaluation is "A" when the peeled area of the coating film was 0%, the evaluation is "B" when the peeled area was greater than 0% and equal to or smaller than 10%, the evaluation is "C" when the peeled area was greater than 10% and equal to or smaller than 20%, and the evaluation is "D" when the peeled area was greater than 20%.

[Table 1]

Table 1: Property of ink receiving layer and evaluations on UV curable ink

| Section | Painting material No. | 1st texture roll | | 2nd texture roll | | Surface roughness | | Evaluations on UV curable ink | | |
|---|---|---|---|---|---|---|---|---|---|---|
| | | Roll roughness (nm) | Pressure (MPa) | Roll roughness (nm) | Pressure (MPa) | Ra1 (nm) | Ra2 (nm) | Dot diameter ($\mu$m) | L*value | Adhesion |
| Example | 1 | 500 | 72 | 100 | 70 | 429 | 77 | 105 | B | B |
| Example | 2 | 500 | 75 | 500 | 75 | 457 | 458 | 108 | B | A |
| Example | 3 | 500 | 85 | 100 | 70 | 527 | 79 | 115 | A | B |
| Example | 4 | 1,000 | 70 | 300 | 80 | 828 | 272 | 146 | A | A |
| Example | 5 | 1,000 | 85 | 300 | 80 | 1,139 | 281 | 169 | A | A |
| Example | 6 | 1,500 | 80 | 100 | 70 | 1,573 | 79 | 189 | A | B |
| Example | 7 | 2,000 | 80 | 500 | 80 | 1,961 | 474 | 197 | A | A |
| Example | 8 | 2,000 | 90 | 500 | 80 | 2,114 | 487 | 198 | A | A |
| Example | 9 | 3,000 | 75 | 100 | 70 | 2,957 | 72 | 201 | A | B |
| Example | 10 | 3,000 | 75 | 500 | 80 | 2,963 | 468 | 200 | A | A |
| CompEX | 11 | 500 | 66 | 100 | 60 | 382 | 63 | 82 | c | D |
| CompEX | 12 | 500 | 67 | 300 | 75 | 393 | 274 | 85 | c | A |
| CompEX | 13 | 500 | 65 | 500 | 85 | 378 | 527 | 84 | D | A |
| CompEX | 14 | 500 | 70 | 100 | 60 | 416 | 62 | 102 | B | D |
| CompEX | 15 | 500 | 77 | 500 | 85 | 472 | 522 | 110 | c | A |
| CompEX | 16 | 3,000 | 90 | 100 | 60 | 3,074 | 67 | 202 | c | c |
| CompEX | 17 | 3,000 | 90 | 300 | 80 | 3,091 | 268 | 203 | D | A |
| CompEX | 18 | 3,000 | 90 | 500 | 85 | 3,083 | 524 | 205 | E | A |

13

(4) Evaluation

For the material to be painteds of Nos. 1 to 10, arithmetic average roughness Ra1 was 400 to 3,000 nm, and arithmetic average roughness Ra2 was 70 to 500 nm. For the material to be painted of Nos. 1 to 10, the one-dot diameter of the UV curable ink was equal to or greater than 96 $\mu$m, and sufficient spreading was exhibited. In such material to be painteds of Nos. 1 to 10, the gap between each dot is eliminated, and thus the L*value was favorable and smaller than 30, and the adhesion of the UV curable ink was also favorable. In particular, in the material to be painteds of Nos. 3 to 7 whose Ra1 was 500 to 2000 nm, the L*value was smaller than 25, and excellent color development was exhibited.

On the other hand, in the material to be painteds of Nos. 11 to 13, Ra1 was smaller than 400 nm, spreading of the UV curable ink was poor and approximately 80 $\mu$m. It is considered that the L*value was as high as 30 or greater in the material to be painteds of Nos. 11 to 13 since, in the material to be painteds of Nos. 11 to 13, each dot was independent and the ink receiving layer of the foundation was exposed. In addition, for the material to be painteds of Nos. 11, 14 and 16, Ra2 was smaller than 70 nm, and favorable adhesion of the UV curable ink was not obtained. For the material to be painteds of Nos. 13, 15 to 18, Ra1 was greater than 3,000 nm or Ra2 was greater than 500 nm, and thus the UV curable ink intruded into the deep groove on the surface of the ink receiving layer and thus color was weakened, resulting in the L*value of equal to or greater than 30. In particular, in the material to be painted of No. 18, the L*value was significantly poor and equal to or greater than 40.

In conclusion, material to be painteds having an ink receiving layer having arithmetic average roughness Ra1 of 400 to 3,000 nm and arithmetic average roughness Ra2 of 70 to 500 nm exhibited sufficient spreading of the UV curable ink, and favorable adhesion of the UV curable ink.

[Example 2]

1. Preparation of Base Material

The following three types of base materials 1 to 3 were prepared.

(1) Base Material 1

As with Example 1, as an original sheet to be painted, a hot-dip Zn-55%Al alloy-plated steel sheet having a sheet thickness of 0.27 mm and a plating deposition amount on one side of 90g/m2 was prepared. Application-type chromate treatment liquid (NRC300NS; Nippon Paint Co., Ltd.) was applied on the surface of an alkali-degreased original painting sheet to form a chemical conversion film whose deposition amount in terms of total chromium is 50 mg/m2. Next, polyester based primer coating (700P; Nippon Paint Industrial Coatings Co., LTD.) was applied on the chemical conversion film with use of Bar-Coater, and then baked at a final plate temperature of 215°C to form an undercoating film having a dry film thickness of 5 $\mu$m.

Next, as with Example 1, a resin composition for forming an ink receiving layer was applied on the undercoating film with use of Bar-Coater, and then baked at a final plate temperature of 225°C for 1 minute form to an ink receiving layer having a dry film thickness of 20 $\mu$m. The resin composition was prepared by mixing polyester (number-average molecular weight 5,000, glass transition temperature 30°C, hydroxyl value 28 mgKOH/g; DIC Inc.) with methylated melamine resin (CYMEL 303; Mitsui Cytec Co., Ltd.) as a crosslinking agent at a ratio of 70:30 to obtain a base resin, and by further adding catalyst, amine and pigment to the base resin. As the catalyst, dodecylbenzenesulfonic acid was added in an amount of 1wt% with respect to the resin solid content. As the amine, dimethylaminoethanol was added in an amount of 1.25 times the acid equivalent of dodecylbenzenesulfonic acid, as the amine equivalent. As the pigment, titanium oxide having a mean particle diameter of 0.28 $\mu$m (JR-603; TAYCA CORP.), hydrophobic silica A having a mean particle diameter of 5.5 $\mu$m (SILYSIA 456; Fuji Silysia Chemical, Ltd.), hydrophobic silica B having a mean particle diameter of 12 $\mu$m (SILYSIA 476; Fuji Silysia Chemical, Ltd.), mica having a mean particle diameter of 10 $\mu$m (SJ-010; Yamaguchi Mica Co.,Ltd.), and acrylic resin beads having a mean particle diameter of 18 $\mu$m (TAFTIC AR650S; Toyobo Co., Ltd.) were used, and thus ink receiving layers provided with minute irregularity were formed (see, Table 2 and Table 3).

(2) Base Material 2

The original sheet to be painted, the chemical conversion film and the undercoating painting which are the same as those of base material 1 were used. Next, a resin composition (see Tables 2 and 3) prepared by adding pigment same as that of base material 1 to an acrylic emulsion base coating (IM coat 4100; Kansai Paint Co., Ltd.) was applied on an undercoating film with use of Bar-Coater, and baking was performed for 2 minutes at a final plate temperature of 130°C, and thus ink receiving layers having minute irregularity and a dry film thickness of 20 $\mu$m were formed.

(3) Base Material 3

As the original sheet to be painted, a fiber reinforced cement board-type ceramic siding, which was manufactured in accordance with JIS A 5422 with use of wood fiber or wood chip as reinforcing agent, was prepared. On the surface of the ceramic siding, ink receiving layers having minute irregularity and a composition and a dry film thickness same as those of base material 2 were formed.

2. Production of Printed material

(1) Ink-jet Printing

Ink-jet printing was conducted on the base material by an ink-jet printer (PATTERNING JET; TRYTECH Co., Ltd.) with use of cationic UV curable ink prepared in the following procedures. Ultraviolet ray was applied to the surface of the base material on which ink-jet printing has been performed, and the UV curable ink was cured. The preparation method of the cationic UV curable ink, the condition of ink-jet printing and the condition of irradiation of ultraviolet ray were as follows.

(2) Method of Adjusting Cationic UV curable ink

9 parts by weight of polymer dispersant (PB821; Ajinomoto Fine-Techno Co., Inc.), 71 parts by weight of oxetane compound (OXT211; Toagosei, Inc.), 20 parts by weight of black pigment (Pigment Black 7) and 200g of zirconia beads (diameter: 1 mm) were put in a glass bottle, and then the glass bottle was hermetically sealed. Next, dispersion process was conducted using a paint shaker for four hours. After the dispersion process, the zirconia beads were removed to prepare a pigment dispersion. 14 parts by weight of pigment dispersion was mixed with 4 parts by weight of epoxidation linseed oil (Vikoflex9040; ATOFINA, Inc.), 34 parts by weight of EP-1 (see Japanese Patent Publication No. 4539104, paragraph 0165), 24 parts by weight of oxetane compound (OXT221; Toagosei, Inc.) and 8.9 parts by weight of oxetane compound (OXT211; Toagosei, Inc.) as a photo-polymerizable compound; 0.05 parts by weight of N-ethyldiethanolamine as a basic compound; 0.025 parts by weight of perfluoroalkyl group-containing acrylic oligomer (MEGAFACEF178k; DIC Inc.) and 0.025 parts by weight of perfluoroalkyl group-containing ethylene oxide adduct (MEGAFACEF1405; DIC Inc.) as surfactant; 10 parts by weight of glycol ether (HISOLVE BDB; Toho Chemical Industry Co., Ltd.) as compatibilizer; and 5 parts by weight of triphenyl sulfonium salt (UV16992; Dow Chemical Co. Inc.) as photoacid generator. Thus, cationic UV curable ink was prepared.

The condition of ink-jet printing, the condition of irradiation of ultraviolet ray, the method of evaluating the printed material are the same as those of Example 1.

[Table 2] Table 2: Composition of resin composition, property of ink receiving layer and evaluations on UV curable ink

| Section | Material to be painted No. | Base material No. | Pigment | | | | | | | Pigment concentration (wt%) | Surface roughness | | Evaluations on UV curable ink | | |
|---|---|---|---|---|---|---|---|---|---|---|---|---|---|---|---|
| | | | Titanium oxide (wt%) | Pigment having particle diameter of 4μm or larger | | | | | | | Ra1 (nm) | Ra2 (nm) | Dot diameter (μm) | L*value | Adhesion |
| | | | | Hydrophobic silicaA (wt%) | Hydrophobic silica B (wt%) | Mica (wt%) | Beads (wt%) | Total (wt%) | | | | | | | |
| Example | 19 | 1 | 40 | 2 | 3 | 5 | 0 | 10 | | 50 | 534 | 75 | 114 | A | B |
| Example | 20 | 1 | 51 | 4 | 0 | 4 | 2 | 10 | | 61 | 627 | 129 | 125 | A | A |
| Example | 21 | 2 | 60 | 3 | 0 | 5 | 2 | 10 | | 70 | 654 | 217 | 128 | A | A |
| Example | 22 | 2 | 32 | 4 | 4 | 12 | 3 | 23 | | 55 | 821 | 264 | 145 | A | A |
| Example | 23 | 1 | 40 | 3 | 4 | 14 | 2 | 23 | | 63 | 891 | 299 | 151 | A | A |
| Example | 24 | 1 | 51 | 5 | 5 | 10 | 3 | 23 | | 74 | 1237 | 327 | 175 | A | A |
| Example | 25 | 1 | 25 | 6 | 6 | 12 | 6 | 30 | | 55 | 1987 | 287 | 197 | A | A |
| Example | 26 | 3 | 35 | 6 | 6 | 12 | 6 | 30 | | 65 | 2626 | 328 | 200 | B | A |
| Example | 27 | 1 | 45 | 8 | 6 | 13 | 3 | 30 | | 75 | 2893 | 372 | 200 | B | A |

[Table 3] Table 3: Composition of resin composition, property of ink receiving layer and evaluations on UV curable ink

| Section | Painting material No. | Base material No. | Titanium oxide (wt%) | Pigment having particle diameter of 4μm or larger | | | | | Pigment concentration (wt%) | Surface roughness | | Evaluations on UV curable ink | | |
|---|---|---|---|---|---|---|---|---|---|---|---|---|---|---|
| | | | | Hydrophobic silicaA (wt%) | Hydrophobic silicaB (wt%) | Mica (wt%) | Beads (wt%) | Total (wt%) | | Ra1 (nm) | Ra2 (nm) | Dot diameter (μm) | L*value | Adhesion |
| Comp EX | 28 | 1 | 45 | 0 | 0 | 0 | 0 | 0 | 45 | 187 | 28 | 62 | D | D |
| Comp EX | 29 | 1 | 75 | 0 | 0 | 0 | 0 | 0 | 75 | 242 | 36 | 72 | D | D |
| Comp EX | 30 | 1 | 41 | 3 | 0 | 4 | 0 | 7 | 48 | 357 | 65 | 90 | D | C |
| Comp EX | 31 | 1 | 44 | 2 | 2 | 4 | 0 | 8 | 52 | 379 | 72 | 93 | D | B |
| Comp EX | 32 | 1 | 65 | 4 | 0 | 4 | 1 | 9 | 74 | 394 | 126 | 95 | D | B |
| Comp EX | 33 | 1 | 37 | 3 | 0 | 5 | 2 | 10 | 47 | 489 | 45 | 108 | B | D |
| Comp EX | 34 | 1 | 24 | 4 | 4 | 12 | 3 | 23 | 47 | 723 | 46 | 135 | A | D |
| Comp EX | 35 | 1 | 19 | 6 | 6 | 14 | 4 | 30 | 49 | 1348 | 54 | 181 | A | D |
| Comp EX | 36 | 1 | 49 | 5 | 8 | 12 | 5 | 30 | 79 | 2979 | 516 | 201 | C | C |
| Comp EX | 37 | 1 | 16 | 8 | 8 | 12 | 4 | 32 | 48 | 3045 | 67 | 201 | C | D |
| Comp EX | 38 | 2 | 22 | 10 | 8 | 10 | 4 | 32 | 54 | 3267 | 392 | 204 | D | A |
| Comp EX | 39 | 3 | 40 | 9 | 9 | 9 | 5 | 32 | 72 | 3339 | 497 | 206 | D | A |
| Comp EX | 40 | 1 | 46 | 10 | 10 | 8 | 4 | 32 | 78 | 3762 | 603 | 220 | E | C |

(3) Results

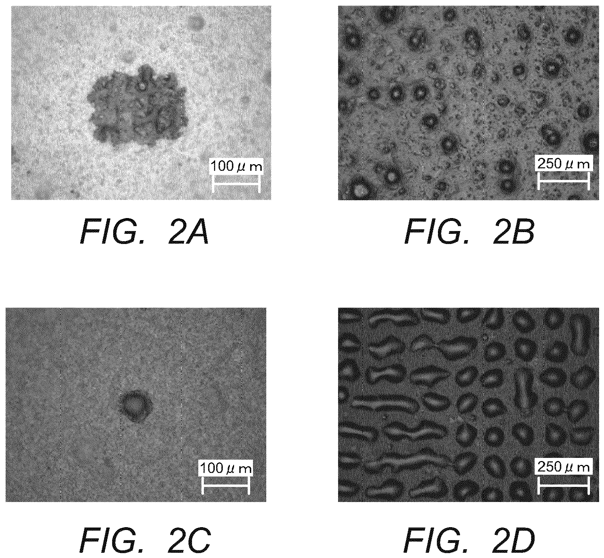

FIGS. 2A to 2D are enlarged photographs of the surfaces of the material to be painteds on which UV curable ink was printed. FIG. 2A is an enlarged photograph of the surface of the material to be painted No. 25 on which one-dot printing has been performed, FIG. 2B is an enlarged photograph of the surface of the material to be painted No. 25 on which printing has been performed at 100%, FIG. 2C is an enlarged photograph of the surface of the material to be painted No. 29 on which one-dot printing has been performed, and FIG. 2D is an enlarged photograph of the surface of the material to be painted No. 29 on which printing has been performed at 100%.

Arithmetic average roughness Ra1 of the material to be painteds of Nos. 19 to 27 was 400 to 3,000 nm, and arithmetic average roughness Ra2 of the material to be painteds of Nos. 19 to 27 was 70 to 500 nm. As shown in Table 2, the one-dot diameter of UV curable ink of the printed materials of Nos. 19 to 27 was equal to or greater than 96 $\mu$m, and sufficient spreading was exhibited (FIG. 2A: No. 25). As a result, as illustrated in FIG. 2B, in the material to be painted of Nos. 19 to 27, the gap between each dot was eliminated, and thus the material to be painted of Nos. 19 to 27 exhibited favorable L*value of smaller than 30, and also exhibited favorable adhesion.

On the other hand, Ra1 of the material to be painteds of Nos. 28 to 32 was smaller than 400 nm, and therefore spreading of UV curable ink was smaller than 96 $\mu$m (FIG. 2C: No. 29). As a result, as illustrated in FIG. 2D, in the material to be painteds of Nos. 28 to 32, each dot was independent and the ink receiving layer of the foundation was exposed, and consequently the L*value of the material to be painteds of Nos. 28 to 32 was equal to or greater than 30.

Ra2 of the material to be painteds of Nos. 28 to 30, 33 to 35 and 37 was smaller than 70 nm, and favorable adhesion could not be obtained. In addition, in the material to be painteds of Nos. 37 to 40, Ra1 was greater than 3000 nm, or Ra2 was greater than 500 nm, and the UV curable ink intruded into the deep groove on the surface of the ink receiving layer, and thus, the color was weakened, resulting in an unfavorable L*value of greater than 30. Further, for the printed materials of Nos. 36 and 40, the pigment concentration was greater than 75%, and the amount of the matrix resin was small, and thus the adhesion of the ink receiving layer was unfavorable.

As described above, sufficient spreading of UV curable ink and favorable adhesion of UV curable ink were exhibited in material to be painted having ink receiving layers in which Ra1 and Ra2 fall within predetermined ranges, 50 to 75wt% of pigment is provided, and the ratio of pigment having a particle size of 4 $\mu$m or larger is 10 to 30wt%.

Industrial Applicability

The material to be painted of the embodiment of the present invention exhibits favorable spreading and adhesion of the actinic radiation-curable ink. Therefore, by applying the actinic radiation-curable ink by ink-jet printing on the surface of the material to be painted of the embodiment of the present invention, a printed material and coated material excellent in design and durability can be provided. The printed material and the coated material of the embodiment of the present invention obtained in the above-mentioned manner are suitable for an inner wall material and an exterior wall material of a building, for example.

**Claims**

**1.** A material to be painted comprising:

a base material; and
an ink receiving layer comprising a resin serving as a matrix disposed on a surface of the base material, which layer being paintable by: applying an actinic radiation-curable ink by inkjet printing; and irradiating the actinic radiation curable ink with an actinic radiation, wherein
the surface of the ink receiving layer has an arithmetic average roughness Ra1 of 400 to 3,000 nm as measured in accordance with JIS B 0601,
the surface of the ink receiving layer has an arithmetic average roughness Ra2 of 70 to 500 nm as measured using a tapping mode atomic force microscope with a measurement range of 30 $\mu$m$\times$30 $\mu$m and pixel data of 512$\times$512,
the ink receiving layer contains 50 to 75wt% of pigment, and,
the pigment includes 10 to 30wt% of pigment whose particle size is 4 $\mu$m or larger.

**2.** The material to be painted according to claim 1, wherein:

the pigment includes pigment having a particle size of smaller than 1 $\mu$m.

**3.** The material to be painted according to claim 1 or 2, wherein the base material is a metal plate.

**4.** A printed material comprising:

the material to be painted according to any one of claims 1 to 3; and
an ink layer disposed on a surface of the material to be painted, wherein
the ink layer is formed by applying an actinic radiation-curable ink by inkjet printing and irradiating the actinic
radiation curable ink with an actinic radiation.

**5.** A coated material comprising:

the printed material according to claim 4, and
an overcoat layer disposed on a surface of the printed material.

**Patentansprüche**

**1.** Material, das mit einem Farbauftrag zu versehen ist, aufweisend:

ein Grundmaterial; und
eine Tintenaufnahmeschicht, die ein als Matrix dienendes Kunstharz aufweist, das auf einer Oberfläche des
Grundmaterials vorgesehen ist, wobei besagte Schicht aufgebracht werden kann durch: Auftragen einer durch
aktinische Strahlung vernetzbaren Tinte mittels Tintenstrahldruck; und Bestrahlen der durch aktinische Strahlung vernetzbaren Tinte mit einer aktinischen Strahlung, wobei
die Oberfläche der Tintenaufnahmeschicht nach messtechnischer Bestimmung gemäß JIS B 0601 eine arithmetische mittlere Rauigkeit Ra1 von 400 bis 3000 nm hat,
die Oberfläche der Tintenaufnahmeschicht nach messtechnischer Bestimmung mittels eines Tapping-Mode-
Rasterkraftmikroskops mit einem Messbereich von $30\mu$m x $30\mu$m und Pixeldaten von 512x512 eine arithmetische mittlere Rauigkeit Ra2 von 70 bis 500 nm hat,
die Tintenaufnahmeschicht 50 bis 75 Gew.-% Pigment enthält, und
das Pigment 10 bis 30 Gew.-% eines Pigments aufweist, dessen Partikelgröße 4 $\mu$m oder größer ist.

**2.** Material, das mit einem Farbauftrag zu versehen ist, nach Anspruch 1, wobei:

das Pigment ein Pigment mit einer Partikelgröße von unter 1 $\mu$m umfasst.

**3.** Material, das mit einem Farbauftrag zu versehen ist, nach Anspruch 1 oder 2, wobei es sich bei dem Grundmaterial
um ein Metallblech handelt.

**4.** Bedrucktes Material, aufweisend:

das mit einem Farbauftrag zu versehende Material nach einem der Ansprüche 1 bis 3; und
eine Tintenschicht, die auf einer Oberfläche des mit einem Farbauftrag zu versehenden Materials vorgesehen
ist, wobei
die Tintenschicht gebildet wird, indem eine durch aktinische Strahlung vernetzbare Tinte mittels Tintenstrahldruck aufgetragen und die durch aktinische Strahlung vernetzbare Tinte mit einer aktinischen Strahlung bestrahlt
wird.

**5.** Beschichtetes Material, aufweisend:

das bedruckte Material nach Anspruch 4, und
eine Überzugsschicht, die auf einer Oberfläche des bedruckten Materials vorgesehen ist.

**Revendications**

**1.** Matériau à peindre comprenant :

un matériau de base ; et

une couche réceptrice d'encre comprenant une résine servant de matrice disposée sur une surface du matériau de base, ladite couche pouvant être peinte par : application d'une encre durcissable par irradiation actinique par impression à jet d'encre ; et irradiation de l'encre durcissable par irradiation actinique moyennant une irradiation actinique, sachant que

la surface de la couche réceptrice d'encre a une dureté moyenne arithmétique Ra1 de 400 à 3 000 nm telle que mesurée conformémement à JIS B 0601,

la surface de la couche réceptrice d'encre a une dureté moyenne arithmétique Ra2 de 70 à 500 nm telle que mesurée au moyen d'un microscope à force atomique en mode intermittent avec une plage de mesure de 30 $\mu$m x 30 $\mu$m et des données de pixel de 512 x 512,

la couche réceptrice d'encre contient 50 à 75 % en poids de pigment, et

le pigment inclut 10 à 30 % en poids de pigment dont la taille de particule est de 4 $\mu$m ou plus.

2. Le matériau à peindre selon la revendication 1, sachant que :

le pigment inclut un pigment ayant une taille de particule inférieure à 1 $\mu$m.

3. Le matériau à peindre selon la revendication 1 ou 2, sachant que le matériau de base est une plaque de métal.

4. Matériau imprimé comprenant :

le matériau à peindre selon l'une quelconque des revendications 1 à 3 ; et

une couche d'encre disposée sur une surface du matériau à peindre, sachant que

la couche d'encre est formée par application d'une encre durcissable par irradiation actinique par impression à jet d'encre et irradiation de l'encre durcissable par irradiation actinique moyennant une irradiation actinique.

5. Matériau revêtu comprenant :

le matériau imprimé selon la revendication 4, et

une couche de recouvrement disposée sur une surface du matériau imprimé.

PIGMENT OF 4μm OR LARGER

PIGMENT OF SMALLER THAN 1μm

MATRIX RESIN

BASE MATERIAL

FIG. 1

FIG. 2A

FIG. 2B

FIG. 2C

FIG. 2D

## EP 2 962 845 B1

**Patent documents cited in the description**

- JP 2000107683 A
- JP 2008272953 A
- JP 2008036549 A
- JP 2008068453 A
- JP 2002355607 A
- US 2010209611 A
- JP 2001220526 A
- JP 2001310937 A
- JP 2010167334 A
- JP 4539104 B